# EUROPEAN PATENT SPECIFICATION

(11) **EP 0 351 041 B1**
(45) Date of publication and mention of the grant of the patent: **20.10.1993**
(21) Application number: 89304811.6
(22) Date of filing: 11.05.1989
(51) Int. Cl.: A47G 27/02, B29C 59/02, B29D 31/00

(54) **Dust control mat with non-cleated borders**
Fussmatte mit einer Umrandung ohne Noppen
Paillasson avec bords non pourvus de protubérances

(30) Priority: 11.07.1988 US 216970
(43) Date of publication of application: 17.01.1990
(73) Proprietor: MILLIKEN RESEARCH CORPORATION, Spartanburg South Carolina 29304 (US)
(72) Inventor: Kerr, Robert Charles, LaGrange Georgia 30240 (US); Murray, John Hunter, LaGrange Georgia 30240 (US)
(74) Representative: Pacitti, Pierpaolo A.M.E.

(56) References cited:
- GB-A- 2 171 902
- US-A- 4 447 201
- US-A- 4 532 098
- US-A- 4 727 697
- US-A- 4 731 275
- US-A- 4 741 065

## Description

This invention relates generally to rubber-backed dust control floor mats of the type which have a pile surface on one side and a rubber or rubber-like material on the other side. Mats of this type are generally used in access ways where people tend to brush or scrape their feet in order to prevent carrying of moisture and/or dirt, accumulated on their footwear, into other areas of the premises. Normally these mats are located in areas of high pedestrian traffic, such as doorways.

In recent years certain dust control mats, such as that shown in US-A-4,741,065, have been molded with cleats on the bottom surface thereof to prevent walking or creeping of the mats when placed on a surface to be protected. It has been found that this type of mat has a tendency to have higher edge rippling than uncleated mats. This rippling effect is very noticeable in those mats in which the cleats on the undersurface thereof extend generally to the edges of the rubber mat.

Therefore, it is an object of this invention to provide a method to produce a cleated dust control mat that has substantially reduced edge rippling characteristics.

In accordance with a first aspect of the invention there is provided a dust control mat comprising: a pile surface fabric, a rubber or rubber-like material connected to said pile surface fabric and extending beyond at least two edges of said pile surface fabric and a plurality of friction resistant cleats on the bottom of said rubber-like material under said pile surface fabric but not extending beyond at least said two edges thereof (as is known generally from US-A-4741065); characterised in that a border portion of said rubber-like material extending beyond at least said two edges of said pile surface fabric is thicker than the body of said rubber-like material under said pile surface fabric, and said rubber-like material has an arcuate shaped transition area between the body of the rubber-like material and the thicker edges thereof, said border portion lying flat on the ground, in use, and the bottom surfaces of the cleats being substantially co-planar with the bottom surface of the border portion.

In accordance with a second aspect of the invention there is provided a pad for use in forming cleats in a dust control mat backed by rubber or rubber-like material, comprising a length of silicone or silicone-like material having two longitudinal edges and having a horizontal surface with a plurality of perforations formed therein (as is known generally from US-A-4741065); characterised in that the distance between the longitudinal edges of the pad is less than the distance between the longitudinal edges of the mat to be formed and in that said pad is cut along said longitudinal edges at an angle to said horizontal surface of between 10° and 25° so as to provide an inclined undersurface along said longitudinal edges.

In accordance with a third aspect of the invention there is provided a method of forming a unitary dust control mat having a pile fibre upper surface and a rubber or rubber-like backing comprising the steps of: placing a pad of perforated silicone or silicone-like material on the surface of a conveyor belt, placing a strip of rubber or rubber-like material on top of the silicone-like pad placing a layer of pile fabric on top of the rubber-like material to form a layered structure, indexing the layered structure into a heated press moulding machine, applying pressure to the layered structure in the press moulding machine to vulcanize the rubber-like material and cause the rubber-like material to pass through the perforations in the silicone-like pad to form cleats, indexing the vulcanised and adhered layered structure to a stripping station outside the press moulding machine and stripping the composite structure from the conveyor belt and the silicone-like pad (as is known generally from US-A-4731275); characterised in that said silicone-like pad has a width less than the desired dust control mat, the strip of rubber-like material being placed on top of the silicone-like pad such that its longitudinal edges overlap the edges of the silicone-like pad, vulcanisation of the rubber-like material further causing the longitudinal edges thereof to bend over the edges of the silicone-like pad to form uncleated border portions of a thickness greater than the body of the rubber-like material, and said rubber-like backing extending beyond at least two of the edges of said pile fiber upper surface.

In accordance with a forth aspect of the invention there is provided a method of making a cleated, unitary dust control mat comprising the steps of: placing a perforated silicone or silicone-like pad having perforations therein onto a conveyor belt, placing a rubber or rubber-like backing material over the silicone-like pad, placing a pile fabric on top of the rubber-like backing material to form a layered structure, placing the layered structure into a heated press moulding machine, supplying heat and pressure to the layered structure to cause the rubber-like backing to be vulcanised to the pile fabric, and the rubber-like material to be forced through the perforations in the silicone-like pad to form cleats, and stripping the vulcanised dust control mat off the conveyor belt and the silicone-like pad (as is known generally from US-A-4731275); characterised in that said silicone-like pad has a width less than the desired dust control mat, the longitudinal edges of the silicone-like pad being cut at an angle to provide an inclined undersurface therealong; and in that the rubber-like backing material is placed over the silicone-like pad with the edges thereof extending beyond the longitudinal edges of the silicone-like pad, vulcanisation of the rubber-like backing causing the longitudinal edges of the silicone-like pad to be bent over by the rubber-like backing to form uncleated rubber-like edges for the dust control mat of greater thickness than the body of the rubber-like backing material.

Other objects and advantages of the invention will become readily apparent as the specification proceeds to describe the invention with reference to the accompanying drawings, in which:
Figure 1 is a schematic representation of the dust control mat manufacturing machine;
Figure 2 shows a molded dust control mat as it exits from the press molding machine;
Figure 3 is the dust control mat preassembled prior to molding thereof;
Figure 4 shows the molded dust control mat prior to being stripped off the conveyor belt; and
Figure 5 is a partial cross-sectional view of a completed, vulcanized dust control mat.

In the preferred form of the invention the mats 10 consist of pile yarns 14 of cotton, polyester, etc. tufted through a woven or nonwoven substrate 16 of suitable material with the bottom 18 of the tufts adhered to the rubber or rubber-like backing 20 during vulcanization. Molded integral with or otherwise secured to the bottom of the backing 20 are a plurality of anti-creep cleats 22. Each of the mats commonly have a border portion 24 therearound.

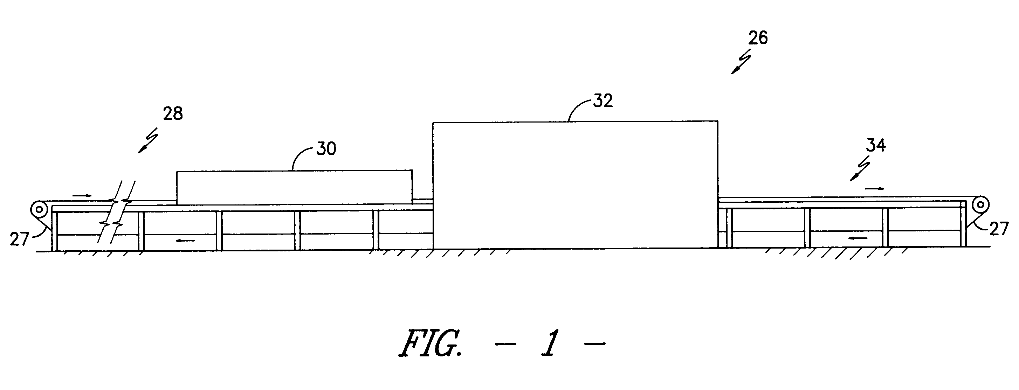

The mat 10 of this invention is assembled, molded and vulcanized on the machine, generally designated 26, of Figure 1. The machine 26 uses an endless, Teflon-coated conveyor belt 27 to carry the mats 10 from the assembly station 28, through the preheater 30 into the press molding apparatus 32 and out to the separating station 34. The press molding apparatus can be of any suitable type such as that shown in US-A-4,447,201. To overcome or alleviate the above-mentioned edge rippling problems it is desired to produce a dust control mat which has the bottom of the outer two longitudinal edges uncleated and a thickness of rubber at such edges which is approximately 10% greater in thickness than the rubber in the body of the rubber mat.

In production of dust control mats prior to the herein-disclosed invention the mats were preassembled at station 28 by just laying down a perforated silicone pad or silicone-like pad such as butyl rubber on the conveyor belt 27. The silicone pad was of a length to accommodate one dust control mat or a plurality of mats and had a width at least equal to the desired width of rubber backing. Then a rubber backing was placed over the silicone pad and a tufted fabric placed on top of the rubber backing. The conveyor belt 27 was then indexed to place the preassembled mat in the preheater 30 which has a temperature in the range of 115°C - 127°C (240°F - 260°F). When the conveyor belt has been indexed another dust control mat is preassembled at station 28 while the first preassembled mat is being preheated. After a period of approximately four (4) minutes the conveyor belt 27 is again indexed to place the preheated mat into the press mold 32 and the second preassembled mat into the preheater 30 while a third mat is being preassembled. In the press mold 32, at a temperature in the range of approximately 160°C - 171°C (320°F - 340°F) the rubber backing is vulcanized to the tufted fabric under the action of a pressing force to extrude the soft rubber through the perforations in the silicone pad to form the cleats 22 therein.

After another four (4) minutes the conveyor belt 27 is again indexed to move the first vulcanized mat into the stripping station to be removed from the silicone pad and the conveyor belt 27 while the second and third preassemblies are being indexed into the press mold 32 and the preheater 30, respectively, and a fourth preassembled mat is being put together.

It should be understood that a multiplicity of silicone pads can be placed side by side and can be any desired length. Also, depending on the size of the mat a plurality of mats can be treated simultaneously at any one station depending on the size of the assembly station, preheater or press mold, etc. The above-described method produces a dust control mat of reduced thickness due to a portion of the rubber from the rubber backing being used to produce the cleats. This loss of rubber was approximately 10% and contributed to the edge rippling problem.

To overcome this problem a perforated silicone pad 36 was selected which is 5 - 10 cm (2 - 4 inches) narrower along each longitudinal edge so the longitudinal edges 38 will maintain the original rubber thickness while the cleats 22 are being formed on the interior of the mat 10 during press molding. In the preferred form of the invention the smooth longitudinal edge or border 38 will have a thickness of about 1.32 mm (52 mils) while the body of the rubber backing will have a thickness of about 1.2 mm (47 mils) thereby providing a stiffening effect at the edges to reduce the tendency to ripple.

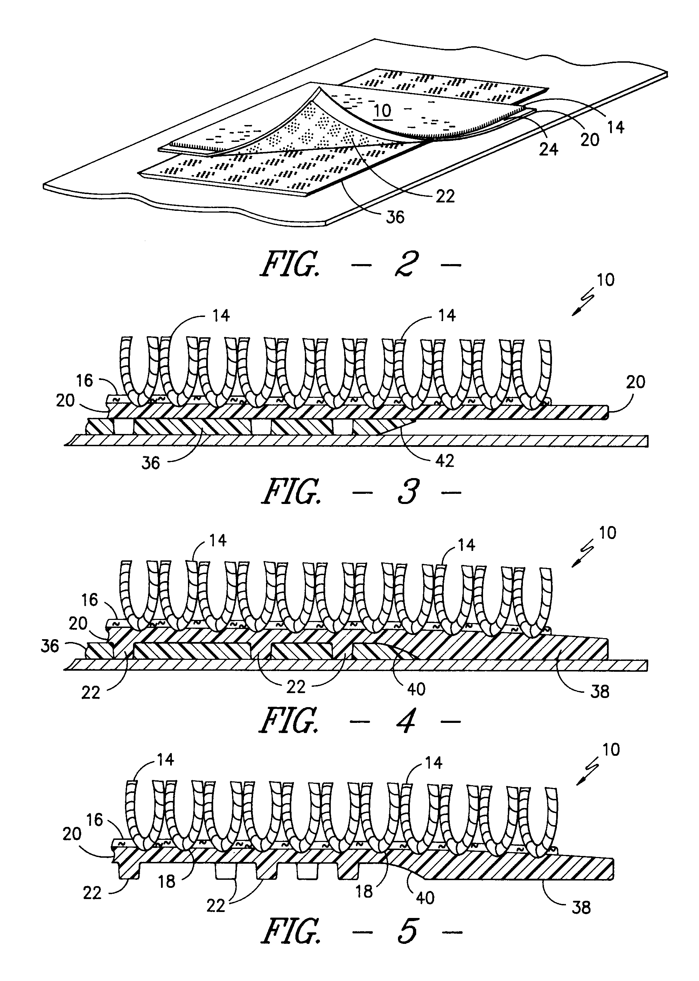

To prevent excessive stress between the body of the rubber backing material and the longitudinal edge or border 38 at the transition point 40 it is desired to have a radius of curvature rather than a sharp vertical transition. To accomplish this, as shown in Figure 3, the longitudinal underedges of the silicone pad are cut at an angle 42 of between 10° - 25°, preferably 20°, so that during molding and vulcanization it will bend or deflect over as shown in Figure 4 to form the radius 40 as shown in Figure 5.

The above modifications provide a cleated dust control mat in which the rubber backing has smooth longitudinal edges of a thickness of 10% greater than the thickness of the cleated body of the rubber backing. These thicker longitudinal edges or borders provide a stiffening effect which reduces rippling tendencies and increases tear strength. Increased tear strength is particularly important along longitudinal edges where most of border tearing usually occurs. This additional thickness also causes the edges to curl down to increase the tendency to hug the covered surface. Additionally, since the width of the silicone pads has been reduced, the cost of the pad has been reduced while ease of handling, because of reduced size, has been increased. Although the preferred embodiment of the invention has been described, it is contemplated that many changes may be made without departing from the scope or spirit of the claims.

## Claims

1. A dust control mat (10) comprising: a pile surface fabric (14, 16), a rubber or rubber-like material (20) connected to said pile surface fabric (14, 16) and extending beyond at least two edges of said pile surface fabric (14, 16) and a plurality of friction resistant cleats (22) on the bottom of said rubber-like material (20) under said pile surface fabric (14, 16) but not extending beyond at least said two edges thereof; characterised in that a border portion (38) of said rubber-like material (20) extending beyond at least said two edges of said pile surface fabric (14, 16) is thicker than the body of said rubber-like material (20) under said pile surface fabric (14, 16), and said rubber-like material (20) has an arcuate shaped transition area between the body of the rubber-like material (20) and the thicker edges thereof, said border portion (38) lying flat on the ground, in use, and the bottom surfaces of the cleats (22) being substantially co-planar with the bottom surface of the border portion (38).

2. The dust control mat (10) of Claim 1 wherein the border portion (38) is approximately 10% thicker than the body of said rubber-like material.

3. A pad (36) for use in forming cleats (22) in a dust control mat (10), backed by rubber or rubber-like material, comprising a length of silicone or silicone-like material having two longitudinal edges and having a horizontal surface with a plurality of perforations formed therein; characterised in that the distance between the longitudinal edges of the pad (36) is less than the distance between the longitudinal edges of the mat (10) to be formed and in that said pad (36) is cut along said longitudinal edges at an angle (42) to said horizontal surface of between 10° and 25° so as to provide an inclined undersurface along said longitudinal edges.

4. The pad (36) of Claim 3 wherein said angle is approximately 20°.

5. A method of forming a unitary dust control mat (10) having a pile fibre upper surface (14, 16) and a rubber or rubber-like backing (20) comprising the steps of: placing a pad of perforated silicone or silicone-like material (36) on the surface of a conveyor belt (27), placing a strip of rubber or rubber-like material (20) on top of the silicone-like pad (36), placing a layer of pile fabric (14, 16) on top of the rubber-like material (20) to form a layered structure, indexing the layered structure into a heated press moulding machine (32), applying pressure to the layered structure in the press moulding machine (32) to vulcanize the rubber-like material (20) and cause the rubber-like material (20) to pass through the perforations in the silicone-like pad (36) to form cleats (22), indexing the vulcanised and adhered layered structure to a stripping station (34) outside the press moulding machine (32) and stripping the composite structure from the conveyor belt (27) and the silicone-like pad (36); characterised in that said silicone-like pad (36) has a width less than the desired dust control mat (10), the strip of rubber-like material (20) being placed on top of the silicone-like pad (36) such that its longitudinal edges overlap the edges of the silicone-like pad (36), vulcanisation of the rubber-like material (20) further causing the longitudinal edges thereof to bend over the edges of the silicone-like pad (36) to form uncleated border portions (38) of a thickness greater than the body of the rubber-like material (20), and said rubber-like backing (20) extending beyond at least two of the edges of said pile fiber upper surface (14, 16).

6. The method of Claim 5 wherein the layered structure is preheated (30) prior to passage into the press moulding machine (32).

7. A method of making a cleated, unitary dust control mat (10) comprising the steps of: placing a perforated silicone or silicone-like pad (36) having perforations therein onto a conveyor belt (27), placing a rubber or rubber-like backing material (20) over the silicone-like pad (36), placing a pile fabric (14, 16) on top of the rubber-like backing material (20) to form a layered structure, placing the layered structure into a heated press moulding machine (32), supplying heat and pressure to the layered structure to cause the rubber-like backing (20) to be vulcanised to the pile fabric (14, 16), and the rubber-like material (20) to be forced through the perforations in the silicone-like pad to form cleats (22), and stripping the vulcanised dust control mat (10) off the conveyor belt (27) and the silicone-like pad (36); characterised in that said silicone-like pad (36) has a width less than the desired dust control mat (10), the longitudinal edges of the silicone-like pad (36) being cut at an angle to provide an inclined undersurface therealong; and in that the rubber-like backing material (20) is placed over the silicone-like pad (36) with the edges thereof extending beyond the longitudinal edges of the silicone-like pad (36), vulcanisation of the rubber-like backing (20) causing the longitudinal edges of the silicone-like pad to be bent over by the rubber-like backing (20) to form uncleated rubber edges (38) for the dust control mat (10) of greater thickness than the body of the rubber backing material (20).

8. The method of Claim 7 wherein the layered structure is preheated (30) prior to being supplied to the press moulding machine (32).

## Patentansprüche

1. Fußmatte (10) mit einem Polflächengewebe (14, 16), einem Kautschuk-Material oder kautschukähnlichen Material (20), das mit dem genannten Polflächengewebe (14, 16) verbunden ist und über wenigstens zwei Ränder des genannten Polflächengewebes (14, 16) hinausragt, und einer Vielzahl von mit Reibungswiderstand behafteten Noppen (22) auf der Unterseite des genannten kautschukähnlichen Materials (20) unter dem genannten Polflächengewebe (14, 16), jedoch nicht über die genannten wenigstens zwei Ränder desselben hinausragend, dadurch gekennzeichnet, daß ein Randabschnitt (38) des genannten kautschukähnlichen Materials (20), der über wenigstens die genannten zwei Ränder des genannten Polflächengewebes (14, 16) hinausragt, dicker ist als der Hauptteil des genannten kautschukähnlichen Materials (20) unter dem genannten Polflächengewebe (14, 16), und das genannte kautschukähnliche Material (20) einen bogenförmigen Übergangsbereich zwischen dem Hauptteil des kautschukähnlichen Materials (20) und dessen dickeren Rändern aufweist, wobei der genannte Randabschnitt (38) im Gebrauch auf dem Boden flach aufliegt und die Unterseiten der Noppen (22) im wesentlichen in derselben Ebene wie die Unterseite des Randabschnitts (38) angeordnet sind.

2. Fußmatte (10) nach Anspruch 1, bei der der Randabschnitt (38) etwa 10% dicker ist als der Hauptteil des genannten kautschukähnlichen Materials.

3. Kissen (36) zur Verwendung bei der Ausbildung von Noppen (22) in einer Fußmatte (10), die eine Unterlage aus Kautschuk oder kautschukähnlichem Material aufweist, mit einem Stück Silikon-Material oder silikonähnlichem Material mit zwei Längskanten und einer waagerechten Fläche mit einer Vielzahl von darin ausgebildeten Perforationen, dadurch gekennzeichnet, daß der Abstand zwischen den Längskanten des Kissens (36) kleiner ist als der Abstand zwischen den Längskanten der herzustellenden Matte (10), und daß das genannte Kissen (36) entlang der genannten Längskanten gegenüber der genannten waagerechten Fläche unter einem Winkel (42) zwischen 10° und 25° beschnitten ist, um entlang den genannten Längskanten eine schräge Unterseite zu schaffen.

4. Kissen (36) nach Anspruch 3, bei dem der genannte Winkel etwa 20° beträgt.

5. Verfahren zum Herstellen einer einteiligen Fußmatte (10) mit einer Polfaser-Oberseite (14, 16) und einer Kautschuk-Unterlage oder kautschukähnlichen Unterlage (20), umfassend die Arbeitsschritte: Auflegen eines Kissens aus perforiertem Silikon oder silikonähnlichen Werkstoff (36) auf die Oberfläche eines Transportbandes (27), Auflegen eines Streifens Kautschuk-Material oder kautschukähnlichen Materials (20) auf das silikonähnliche Kissen (36), Auflegen einer Lage Polgewebe (14, 16) auf das kautschukähnliche Material (20), derart, daß eine Schichtstruktur gebildet wird, Weitertransportieren der Schichtstruktur in eine beheizte Formteilpresse (32), Ausüben von Druck auf die Schichtstruktur in der Formteilpresse (32), derart, daß das kautschukähnliche Material (20) vulkanisiert und durch die Perforationen im silikonähnlichen Kissen (36) zur Ausbildung von Noppen (22) geleitet wird, Weitertransportieren der vulkanisierten und in sich haftenden Schichtstruktur zu einer Abstreifstation (34) außerhalb der Formteilpresse (32), und Abstreifen der Verbundstruktur vom Förderband (27) und dem silikonähnlichen Kissen (36), dadurch gekennzeichnet, daß das silikonähnliche Kissen (36) von kleinerer Breite als die angestrebte Fußmatte (10) ist, wobei der Streifen kautschukähnlichen Materials (20) auf das silikonähnliche Kissen (36) in der Weise aufgelegt wird, daß seine Längsränder die Ränder des silikonähnlichen Kissens (36) überlappen, das Vulkanisieren des kautschukähnlichen Materials (20) ferner bewirkt, daß dessen Längsränder sich über die Ränder des silikonähnlichen Kissens (36) biegen und noppenfreie Randabschnitte (38) von einer Dicke größer als der Hauptteil des kautschukähnlichen Materials (20) bilden, und die genannte kautschukähnliche Unterlage (20) über wenigstens zwei der Ränder der genannten Polfaser-Oberseite (14, 16) hinausragt.

6. Verfahren nach Anspruch 5, bei dem die Schichtstruktur vor dem Einlaufen in die Formteilpresse (32) vorgewärmt (30) wird.

7. Verfahren zum Herstellen einer mit Noppen versehenen einteiligen Fußmatte (10), umfassend die Arbeitsschritte: Auflegen eines perforierten Kissens (36) aus Silikon oder silikonähnlichem Werkstoff, das Perforationen aufweist, auf ein Transportband (27), Auflegen eines Kautschuk- oder kautschukähnlichen Unterlagenmaterials (20) auf das silikonähnliche Kissen (36), Auflegen eines Polgewebes (14, 16) auf das kautschukähnliche Unterlagenmaterial (20), derart, daß eine Schichtstruktur gebildet wird, Verbringen der Schichtstruktur in eine beheizte Formteilpresse (32), Zuführen von Wärme und Ausüben von Druck auf die Schichtstruktur, derart, daß die kautschukähnliche Unterlage (20) an das Polgewebe (14, 16) anvulkanisiert wird und das kautschukähnliche Material (20) durch die Perforationen im silikonähnlichen Kissen zur Ausbildung von Noppen (22) gepreßt wird, und Abstreifen der vulkanisierten Fußmatte (10) vom Förderband (27) und vom silikonähnlichen Kissen (36), dadurch gekennzeichnet, daß das silikonähnliche Kissen (36) von kleinerer Breite als die angestrebte Fußmatte (10) ist, wobei die Längsränder des silikonähnlichen Kissens (36) zur Schaffung einer schrägen Unterseite an ihnen unter einem Winkel beschnitten sind, und daß das kautschukähnliche Unterlagenmaterial (20) auf das silikonähnliche Kissen (36) in der Weise aufgelegt wird, daß seine Ränder über die Längsränder des silikonähnlichen Kissens (36) hinausragen, wobei das Vulkanisieren der kautschukähnlichen Unterlage (20) bewirkt, daß über die Längsränder des silikonähnlichen Kissens die kautschukähnliche Unterlage (20) gebogen wird und noppenfreie Kautschukränder (38) für die Fußmatte (10) von einer Dicke größer als der Hauptteil des kautschukähnlichen Unterlagenmaterials (20) bildet.

8. Verfahren nach Anspruch 7, bei dem die Schichtstruktur vor dem Zuführen in die Formteilpresse (32) vorgewärmt (30) wird.

## Revendications

1. Tapis anti-poussière (10) comprenant : un tissu de surface à poil (14, 16), une matière (20) caoutchouteuse ou analogue au caoutchouc assemblée audit tissu de surface à poil (14, 16) et s'étendant au-delà d'au moins deux bords dudit tissu de surface à poil (14, 16), et une série de boutons (22) résistants au frottement prévue sur la surface inférieure de ladite matière (20) analogue au caoutchouc, au-dessous dudit tissu de surface à poil (14, 16), mais qui ne déborde pas au-delà d'au moins les deux bords précités de ce tissu, caractérisé en ce qu'une partie de bordure (38) de ladite matière (20) analogue au caoutchouc, qui déborde au-delà d'au moins les deux bords précités dudit tissu de surface à poil (14, 16) est plus épaisse que le corps de ladite matière (20) analogue au caoutchouc située au-dessous dudit tissu de surface à poil (14, 16), ladite matière (20) analogue au caoutchouc présente une zone de transition de forme arquée entre le corps de la matière (20) analogue au caoutchouc et les bords plus épais de cette matière, ladite partie de bordure (38) étant appuyée à plat sur le sol en utilisation et les surfaces inférieures des boutons (22) étant sensiblement dans le même plan que la surface inférieure de la partie bordure (38).

2. Tapis anti-poussière (10) selon la revendication 1, dans lequel la partie bordure (38) est d'environ 10 % plus épaisse que le corps de ladite matière analogue au caoutchouc.

3. Semelle (36) servant à former des boutons (22) dans un tapis anti-poussière (10) doublé d'une matière caoutchouteuse ou analogue au caoutchouc, comprenant une longueur d'une matière de silicone ou analogue au silicone ayant deux bords longitudinaux et ayant une surface horizontale dans laquelle est formée une série de perforations, caractérisé en ce que la distance entre les bords longitudinaux de la semelle (36) est inférieure à la distance entre les bords longitudinaux du tapis (10) à former, et en ce que ladite semelle (36) est taillée le long desdits bords longitudinaux en formant un angle (42) d'entre 10 ° et 25 ° avec ladite surface horizontale de manière à donner naissance à une surface inférieure inclinée le long desdits bords longitudinaux.

4. Semelle (36) selon la revendication 3, dans laquelle ledit angle est d'environ 20°.

5. Procédé pour former un tapis anti-poussière unitaire (10) ayant une surface supérieure (14, 16) faite de fibres de poil et un doublage (20) en matière caoutchouteuse ou analogue au caoutchouc, qui comprend les phases consistant à : placer un semelle en silicone ou matière (36) analogue au silicone, perforée sur la surface d'une courroie transporteuse (27), placer une bande de matière caoutchouteuse ou analogue au caoutchouc (20) au-dessus de la semelle (36) de matière analogue au silicone, placer une couche de tissu à poil (14, 16) sur la matière (20) analogue au caoutchouc, pour former une structure multicouche, faire entrer la structure multicouche dans une machine à mouler (32) à presse chauffante, appliquer une pression à la structure multicouche dans la machine à mouler à presse (32) pour vulcaniser la matière (20) analogue au caoutchouc et contraindre la matière (20) analogue au caoutchouc à passer à travers les perforations de la semelle (36) en matière analogue au silicone, pour former des boutons (22), faire avancer la structure multicouche vulcanisée et collée à un poste de séparation (34) situé à l'extérieur de la machine à mouler à presse (32) et séparer la structure composite de la courroie transporteuse (27) et de la semelle (36) en matière analogue au silicone, caractérisé en ce que ladite semelle (36) en matière analogue au silicone possède une largeur inférieure à celle du tapis anti-poussière (10) à obtenir, la bande de matière (20) analogue au caoutchouc étant placée sur la semelle (36) en matière analogue au silicone de telle manière que ses bords longitudinaux recouvrent les bords de la semelle (36) en matière analogue au silicone, la vulcanisation de la matière (20) analogue au caoutchouc amenant en outre les bords longitudinaux de cette matière à se recourber par dessus les bords de la semelle (36) de matière analogue au silicone pour former des parties bordures (38) dépourvues de boutons et d'une plus grande épaisseur que le corps de la matière (20) analogue au caoutchouc, et ledit doublage (20) en matière analogue au caoutchouc débordant au-delà d'au moins deux des bords de ladite surface supérieure à fibres de poil (14, 16).

6. Procédé selon la revendication 5, dans lequel la structure multicouche est préchauffée (30) avant de pénétrer dans la machine à mouler à presse (32).

7. Procédé de fabrication d'un tapis anti-poussière (10) à boutons unitaire qui comprend les phases consistant à : placer une semelle (36) perforé, en matière de silicone ou analogue au silicone, présentant des perforations, sur une courroie transporteuse (27), placer sur la semelle (36) en matière analogue au silicone une matière de doublage (20) en matière caoutchouteuse ou analogue au caoutchouc, placer un tissu à poil (14, 16) sur la matière de doublage (20) analogue au caoutchouc pour former une structure multicouche, placer la structure multicouche dans une machine à mouler (22) à presse chauffante, appliquer de la chaleur et de la pression à la structure multicouche pour faire en sorte que le doublage (20) en matière analogue au caoutchouc soit assemblé au tissu à poil (14, 16) par vulcanisation et que la matière (20) analogue au caoutchouc soit refoulée à force à travers les perforations de la semelle en matière analogue au silicone pour former des boutons (22), et séparer le tapis anti-poussière (10) vulcanisé de la courroie transporteuse (27) et de la semelle (36) en matière analogue au silicone ; caractérisé en ce que ladite semelle (36) en matière analogue au silicone possède une largeur inférieure à celle du tapis anti-poussière (10) à obtenir, les bords longitudinaux de la semelle (36) en matière analogue au silicone étant taillés selon un angle pour former une sous-surface inclinée le long de ces bords, et en ce que la matière de doublage (20) analogue au caoutchouc est placée sur la semelle (36) en matière analogue au silicone, de façon que ses bords débordent au-delà des bords longitudinaux de la semelle (36) en matière analogue au silicone, la vulcanisation du doublage (20) en matière analogue au caoutchouc amenant les bords longitudinaux de la semelle en matière analogue au silicone à se recourber par dessus sous l'action du doublage (20) en matière analogue au caoutchouc pour donner au tapis anti-poussière des bords (38) en caoutchouc dépourvus de boutons et qui sont de plus forte épaisseur que le corps de la matière de doublage en caoutchouc (20).

8. Procédé selon la revendication 7, dans lequel la structure multicouche est préchauffée (30) avant d'être acheminée à la machine à mouler à presse (32).
